# EUROPEAN PATENT SPECIFICATION

(11) **EP 1 573 726 B1**
(45) Date of publication and mention of the grant of the patent: **19.04.2006**
(21) Application number: 03782322.6
(22) Date of filing: 06.12.2003
(51) Int. Cl.: G11B 7/12, G11B 5/54

(54) **SLIDER LOADING MECHANISM**
GLEITER-LADEMECHANISMUS
MECANISME DE CHARGEMENT EQUIPE D'UN CURSEUR

(30) Priority: 20.12.2002 DE 10260905
(43) Date of publication of application: 14.09.2005
(73) Proprietor: Thomson Licensing, 92100 Boulogne-Billancourt (FR)
(72) Inventor: MÖSSNER, Jürgen, 78086 Brigachtal (DE); KNAPPMANN, Stephan, 78658 Zimmern ob Rottweil (DE)
(74) Representative: Thies, Stephan
(86) International application number: PCT/EP2003/013837
(87) International publication number: WO 2004/057586

(56) References cited:
- EP-A- 0 501 477
- EP-A- 0 986 057
- EP-A- 1 113 430
- US-A- 5 508 857
- US-A- 5 644 554
- US-A1- 2001 026 422
- PATENT ABSTRACTS OF JAPAN vol. 1996, no. 07, 31 July 1996 (1996-07-31) & JP 8 077536 A (SONY CORP), 22 March 1996 (1996-03-22)
- KIM ET AL.: "Effective Design and Performance of an Optical Flying Head for Near-Field Redording" JPN.J.APPL.PHYS., vol. 41, March 2002 (2002-03), pages 1884-1888, XP002278125 cited in the application

## Description

The present invention relates to a flexible slider-loading mechanism for an optical drive with interchangeable optical storage media.

In hard-disk technology, use is made of writing/reading heads, referred to hereinbelow as sliders, which are shaped like missiles and float on a thin air cushion above the storage disks of the hard disk. The air cushion here is produced by the rapid rotation of the hard disk. The slider is fastened at the end of a resilient arm and is moved, by way of the latter, to the respective writing/reading positions of the hard disk. The air cushion breaks up if the rotational speed of the hard disk decreases or if the hard disk comes to a standstill, and/or it has to be built up in the first instance when the hard disk starts up. There is thus a special start/stop procedure for these cases, by means of which the slider is applied to the storage disk (loaded) and/or removed therefrom, in order to avoid damage to the storage disk and the slider. Essentially two possibilities are known for the start/stop procedure of the slider:
1.) A special landing zone on the storage disk: there is a parking position on a specifically roughened region of the storage disk. The data region on the storage disk has a very smooth surface. If the slider were to land there, it would be torn off from the resilient arm by adhesive forces as soon as the hard disk starts up.
2.) Rampload mechanism: an appropriate mechanism moves the slider from the storage-disk surface, via a ramp, into a parking position outside the outer periphery of the storage disk. This method is problematic if the storage disk has excessive vertical wobble on the outer periphery, since loading can only take place on the outside.

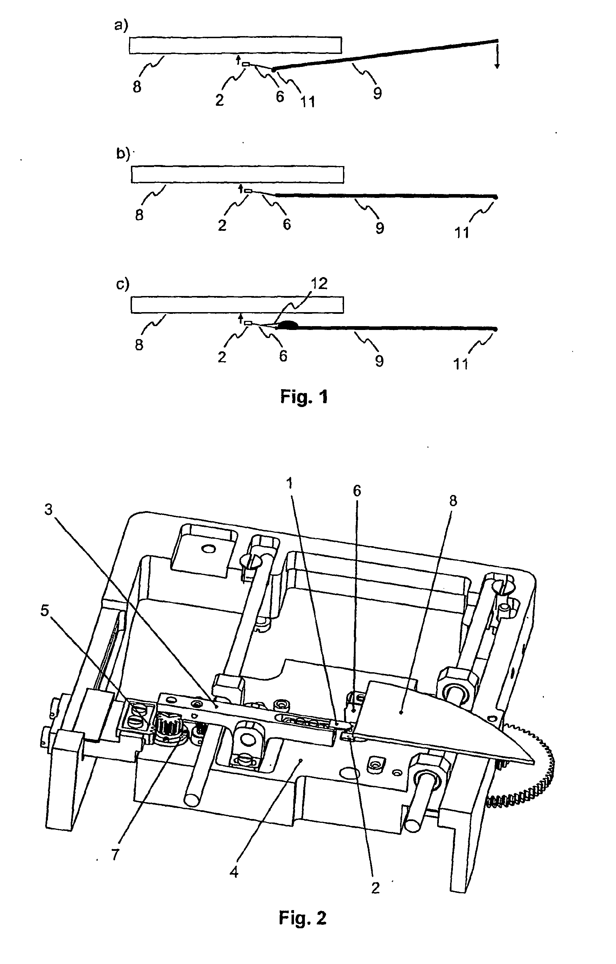

Both of the abovementioned methods are unsuitable for testing systems and other systems with interchangeable storage disks (e.g. optical storage means) since loading cannot take place at all locations of the storage disk and moreover, in case 1, there is no decoupling from the storage disk. Various possibilities have thus been developed for testing systems, and these are illustrated in figure 1.
The methods which are shown in figure 1 have the disadvantage that the slider is guided up onto the storage disk in an undefined or non-parallel manner and the suspension of the resilient arm has to be moved. This adversely affects the reproducibility of the resilient-arm position.

The article entitled "Effective Design and Performance of an Optical Flying Head for Near-Field Recording", Jpn. J. Appl. Phys. Vol. 41 (2002), pp. 1884-1888 by Kim et al. discloses attempts to transfer the displacement of the slider sliding on an air cushion, this being known from hard disks, to optical drives with interchangeable optical storage media. The slider may bear, for example, a magnetic coil and/or an objective lens with a high numerical aperture or a part thereof (e.g. a so-called Solid Immersion Lens, SIL), which can thus be moved, on the optical axis, to a very small operating distance from the optical storage medium. The slider is arranged on an optical writing/reading device which can be displaced relative to the optical storage medium. Since the use of a landing zone is ruled out if interchangeable optical media are used, the construction which is presented in the document makes use of a resilient arm, miniature optics being integrated in a pivoting arm of the resilient-arm fastening. The rampload mechanism is realized in accordance with a mechanism which is known from hard-disk technology. Loading is thus only possible on the outer periphery of the storage medium. In the case of cost-effective storage media made of plastic - in contrast to hard disks - deviations from the ideal disk plane (vertical wobble or axial runout) are usually found on the outer periphery, and these render loading on the outer periphery more difficult or even impossible. This requires a special loading mechanism which can operate on the inner periphery of the storage region or at any other desired location and can decouple the slider from the storage disk altogether.

Different solutions for activating the lever are described in the following documents: US-A-5: 508.857 shows a magnetic swing; USA-A2001/0.264.22 shows a spring loaded lever; EP-A-0.501.477 shows further mechanical swinging; EP-A-0.986.057 refers on head lever in general but does not describe a specific realization. Despite the cited specific realizations, these documents describe a slider-loading mechanism according to the preamble of claim 1.

It is an object of the present invention to present an alternative, improved solution with respect to the prior art.

According to the invention, this is achieved by a slider-loading mechanism for an optical drive, having a slider which is fastened on a resilient arm and is lowered onto the surface of an optical storage medium and/or raised from the surface of the optical storage medium, a loading element which is not connected to the resilient arm being provided, and the loading element acting on the resilient arm and causing the slider to be lowered and/or raised. In the lowered position, the resilient arm is not in contact with the loading element, with the result that the slider slides over the surface of the storage medium without being influenced. In the raised position, the resilient arm is deflected slightly from the surface of the storage medium by the loading element. In this way, the fastening point of the resilient arm is fixed, with the result that the resilient arm, and thus also the slider, is always oriented in the same way in relation to the optical axis in the lowered position. It is additionally possible, however, to provide a vertical adjusting means for adjusting the prestressing of the resilient arm and thus the resilient force which acts on the slider. On account of the changeover between two stable states, namely the slider lowered or the slider raised, there are no undefined intermediate positions.

The loading element advantageously penetrates between the surface of the optical storage medium and the resilient arm.

This easily allows the loading element to act on the resilient arm without there being any need for high-outlay mechanisms for force-transmission purposes.

The loading element is preferably actuated via a lever. By virtue of an indirect lever mechanism, the slider is raised off from the surface of the storage medium by only a few tenths of a millimeter. The slider is thus set down on the surface of the storage medium and/or raised from the surface, as far as possible, parallel thereto.

According to the invention, the lever is actuated via a gear mechanism. Well-defined and reproducible actuation of the lever is achieved in this way. The gear mechanism preferably has a loading pin which is provided with a gearwheel and is screwed into the writing/reading device. By virtue of the rotation of the gearwheel, the loading pin is screwed into the writing/reading device and/or unscrewed therefrom. The movement of the loading pin then serves for actuating the lever.

The gear mechanism advantageously has a rack. By virtue of this rack being fastened on the optical drive outside the displaceable writing/reading device, it is possible to dispense with an additional motor drive for the loading function. The loading operation then takes place, for example, via the rough tracking function of the writing/reading device, this giving rise to a relative movement between the rack and the loading pin screwed into the writing/reading device. The speed of the loading operation can be adjusted via variable rough tracking advancement. It is, of course, also possible to provide a separate motor drive for the loading operation.

A further advantage can be achieved by the rack being arranged in a displaceable manner. In this way, a loading operation is possible at virtually any desired location of the storage medium. It is sufficient, for this purpose, to displace the rack to the desired position. It is nevertheless possible to move to a stable parking position outside the storage medium for changing over the medium.

It is further advantageous to provide a linear drive for the rack, which makes the loading operation possible even when the writing/reading device is at a standstill. This also allows the slider to be set down in the outermost region of the storage medium, which is otherwise very difficult to achieve. At the same time, it is thus possible to skip defective regions of a storage medium and to use storage media with different diameters. In the event of any possible faults, the slider can be raised off from the storage medium at any desired location; standby operation is also possible in any position. If the slider is set down directly in the written disk region, this does not adversely affect the not yet written regions on the storage medium.

According to a further aspect of the invention, the lever is actuated via a cam control means. Well-defined and reproducible actuation of the lever is thus achieved in a straightforward manner. The cam which is required for the cam control means here is fixed on the optical writing/reading device, while the lever is arranged outside the reading/writing region of the optical storage medium. This allows the slider to be set down and/or raised only on the periphery of the storage medium. However, the converse arrangement is also possible, i.e. the cam is arranged outside the reading/writing region of the optical storage medium, while the lever is fixed on the optical writing/reading device. Both arrangements can easily be integrated in existing designs of optical writing/reading devices.

A slider-loading mechanism according to the invention is advantageously used in an apparatus for reading from and/or writing to optical recording media. Using a slider in such an apparatus makes it possible to realize recording mechanisms which utilize optical near-field effects or the magnetooptical recording with an objective-side coil. This is necessary, for example, if use is made of a high numerical aperture and thin substrate and/or covering layer. It is thus possible to achieve relatively high density of data on the storage media.

To aid understanding, the invention will be explained hereinbelow with reference to figures 1 to 4. The same designations designate the same elements. In the figures:
- Fig. 1:: shows loading mechanisms in testing devices for storage media with sliders according to the prior art;
- Fig. 2:: shows a loading mechanism according to the invention for optical drives;
- Fig. 3:: shows a variant of the loading mechanism for a testing system; and
- Fig. 4:: shows a further exemplary embodiment of a loading mechanism according to the invention.

Fig. 1 shows various possible ways of realizing the loading mechanism in the region of testing devices for storage media as are known from the prior art:

### a) Tilting loading lever:

The point of rotation of the loading mechanism is located at the end of the resilient arm (6). The resilient-arm suspension (9) is a type of direct lever mechanism. The loading operation can thus only take place in the outer regions of the storage medium (8) without causing collisions with the storage medium (8).

### b) Loading lever:

The point of rotation (11) of the loading mechanism is located at the end of the resilient-arm suspension (9). The loading operation is thus possible at any desired location of the storage medium (8), but the slider (2) is not guided up parallel to the surface of the storage medium (8). This means that the slider (2) approaches the surface, in the first instance, with an outer edge. This increases the risk of the slider (2) being able to collide with the storage medium (8) before the build-up of the air cushion for stable flight of the slider (2).

### c) Loading lever with loading finger:

During the loading operation, the slider (2) is retained in a virtually horizontal position by support of the resilient arm (6) with a loading finger (12). The slider (2) is thus guided up onto the surface of the storage medium (8) in a more or less parallel manner.

Fig. 2 shows a loading mechanism according to the invention for an optical drive. During operation, with the storage medium (8), which is only shown in part here, rotating, the slider (2) flies on an air cushion approximately 20 nm to 1.5 µm above the surface of the storage medium and is retained in a vertically flexible manner by a resilient arm (6) with defined spring characteristics. For the abovementioned reasons relating to adhesive forces, the slider (2) must not be set down on the surface of the storage medium (8) when the latter is at a standstill. A mechanical loading mechanism, which sets down the slider (2) gently when the storage medium (8) is rotating, is thus required. This allows the air cushion to build up before contact with the surface of the storage medium (8) can take place. The slider (2) is correspondingly raised off from the rotating storage medium (8).

The loading mechanism which is shown in fig. 2 does not require an additional drive since the lever mechanism is actuated via the motor-driven rough tracking function which is provided as standard in the writing/reading device (4). A loading tip (1) penetrates between the surface of the storage medium (8) and the resilient arm (6). This loading tip is mounted on a loading lever (3) which, by way of a defined tilting movement, raises and/or lowers the resilient arm (6) and thus the slider (2). The loading tip (1) makes a displacement of approximately 0.3 mm at the location where force is introduced into the resilient arm (6), of which approximately 0.1 mm is idle displacement until contact is first made with the resilient arm (6). This results in a displacement in the center of the slider (2) of approximately 0.3 mm. The loading lever (3) is actuated by the loading pin (7), which is provided with a gearwheel and is screwed into the writing/reading device (4). The rotation of the loading pin (7) in the thread of the writing/reading device (4) results in a vertical movement upward or downward, depending on the direction of rotation. The defined rotation of the loading pin (7) is realized via a rack (5), which is fitted in a displaceable manner on the frame and of which the number of teeth is coordinated with the leverages of the system and the thread pitch of the loading pin (7). Using the tracking motor provided, depending on the direction of travel, by engagement of the rack (5) at the predefined location, the loading pin (7) is raised or lowered. An appropriate selection of the thread direction and displacement stops for the rack (5) ensure that the slider (2) is always lowered and/or raised in the reading/writing region of the storage medium (8). If the slider (2) is set down, via the loading mechanism, at any desired location on the storage medium (8), rather than on the outer periphery of the storage medium (8), and if the skipped peripheral regions of the storage medium (8) are nevertheless to be read out/written to, the rack (5) then has to be pushed onto the end stop corresponding to the outer periphery of the storage medium (8). Otherwise, the loading mechanism would raise the slider (2) again at the location at which it has set it down. The movement of the writing/reading device (4) in the direction of the center point of the storage medium (8) causes the slider (2) to be lowered onto the surface of the storage medium (8). The movement of the writing/reading device (4) in the direction of the periphery of the storage medium (8) causes the slider (2) to be raised from the surface of the storage medium (8). As an alternative, it is possible to adjust the desired loading position via a suitable linear drive for the rack (5). It is also possible at the same time in this case to realize the loading operation, with the writing/reading device (4) at a standstill, by the displacement of the rack (5).

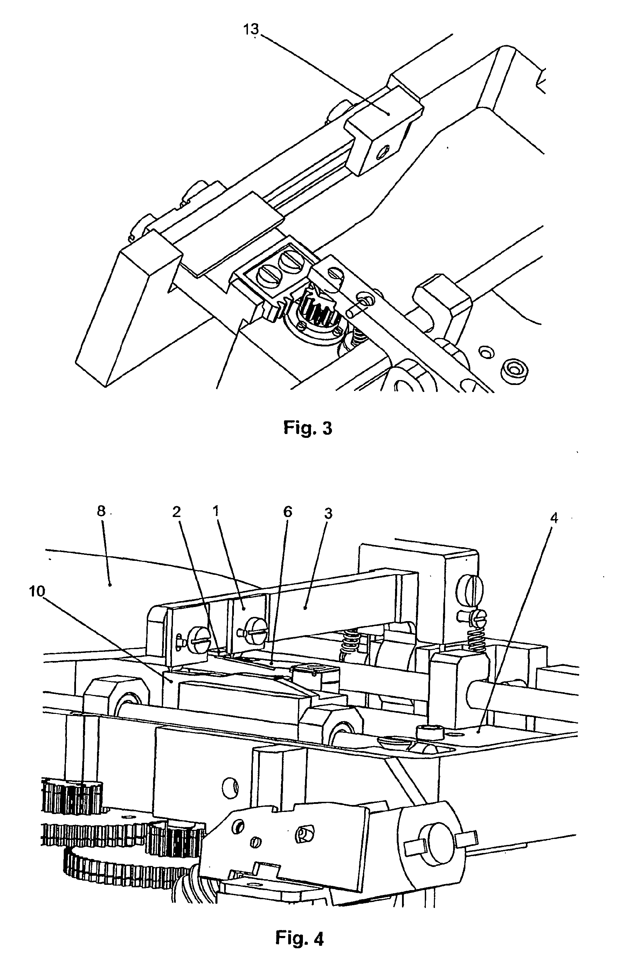

Fig. 3 shows a variant of the loading mechanism according to the invention which can be used, for example, in a testing system. Using a removable end stop (13) allows the rack (5) to be pushed out of the region of the storage medium (8) in order that the slider (2) can also move to the outermost periphery of the storage medium (8) in order to read from and/or write to the storage medium (8) or to carry out other tests thereon.

A further example of a loading mechanism is illustrated in fig. 4. The loading operation here takes place via a cam control means on the outer periphery of the storage medium (8). In this case, the loading lever (3) is fixed on the frame of the drive. The loading operation for lowering and raising the slider (2) always takes place in the outer region of the optical storage medium (8). A cam (10) mounted on the writing/reading device (4) controls the deflection of the resilient arm (6) by the loading tip (1) during the loading operation. The movement of the writing/reading device (4) in the direction of the center point of the storage medium (8) causes the slider (2) to be lowered onto the surface of the storage medium. The movement of the writing/reading device (4) in the direction of the periphery of the storage medium (8) causes the slider (2) to be raised from the surface of the storage medium (8).

## Claims

1. A slider-loading mechanism for an optical drive, having a slider (2) which is fastened on a resilient arm (6) and is lowered onto the surface of an optical storage medium (8) and/or raised from the surface of the optical storage medium (8), and a loading element (1) separate from the resilient arm (6), the loading element (1) penetrating between the surface of the optical storage medium (8) and the resilient arm (6) and being actuated via a lever (3) for acting on the resilient arm (6) to lower and/or raise the slider (2), **characterized in that** the lever (3) is actuated via a gear mechanism (5, 7) having a screwed loading pin (7), which is provided with a gearwheel, and a rack (5), which is arranged in a displaceable manner and interacts with the gearwheel of the loading pin (7).

2. The slider-loading mechanism as claimed in claim 1, **characterized in that** a linear drive is provided for the rack (5).

3. The slider-loading mechanism as claimed in claim 2, **characterized in that** the gearwheel of the loading pin (7) is actuated by moving the rack (5) relative to the gearwheel with the linear drive.

4. The slider-loading mechanism as claimed in one of claims 1 - 3, **characterized in that** the gearwheel of the loading pin (7) is actuated by moving the gearwheel relative to the rack (5) using a rough tracking function.

5. The slider-loading mechanism as claimed in one of claims 1 - 4, **characterized in that** it further includes displacement stops for the rack (5) for ensuring that the slider (2) is always lowered and/or raised in a reading/writing region of the storage medium (8).

6. The slider-loading mechanism as claimed in one of claims 1 - 5, **characterized in that** in the lowered position the resilient arm (6) is not in contact with the loading element (1).

7. The slider-loading mechanism as claimed in one of claims 1 - 6, **characterized in that** it further includes an adjusting means for adjusting the prestressing of the resilient arm (6).

8. A unit for reading from and/or writing to optical recording media, **characterized in that** it has a slider-loading mechanism as claimed in one of claims 1- 7.

## Patentansprüche

1. Slider-Lademechanismus für ein optisches Laufwerk, mit einem Slider (2), der an einem Federarm (6) befestigt ist und auf die Oberfläche eines optischen Speichermediums (8) abgesenkt beziehungsweise von der Oberfläche des optischen Speichermediums (8) angehoben wird, und einem nicht mit dem Federarm (6) verbundenen Ladeelement (1), das zwischen der Oberfläche des optischen Speichermediums (8) und dem Federarm (6) eintaucht und über einen Hebel (3) zum Einwirken auf den Federarm (6) für das Absenken beziehungsweise Anheben des Sliders (2) betätigt wird, **dadurch gekennzeichnet, dass** der Hebel (3) betätigt wird über ein Zahngetriebe (5, 7) mit einem eingeschraubten Ladepin (7), der ein Zahnrad aufweist, und einer Zahnstange (5), die verschiebbar angeordnet ist und mit dem Zahnrad des Ladepins (7) zusammenwirkt.

2. Slider-Lademechanismus gemäß Anspruch 1, **dadurch gekennzeichnet, dass** für die Zahnstange (5) ein Linearantrieb vorgesehen ist.

3. Slider-Lademechanismus gemäß Anspruch 2, **dadurch gekennzeichnet, dass** das Zahnrad des Ladepins (7) durch ein Verschieben der Zahnstange (5) relativ zum Zahnrad mit dem Linearantrieb betätigt wird.

4. Slider-Lademechanismus gemäß einem der Ansprüche 1-3, **dadurch gekennzeichnet, dass** das Zahnrad des Ladepins (7) durch ein Verschieben des Zahnrads relativ zur Zahnstange (5) durch eine Grobspurfolgefunktion betätigt wird.

5. Slider-Lademechanismus gemäß einem der Ansprüche 1-4, **dadurch gekennzeichnet, dass** er ferner Endanschläge für die Zahnstange (5) aufweist um sicherzustellen, dass der Slider (2) immer in einer Lese-/Schreibregion des Speichermediums (8) abgesenkt und/oder angehoben wird.

6. Slider-Lademechanismus gemäß einem der Ansprüche 1-5, **dadurch gekennzeichnet, dass** der Federarm (6) in der abgesenkten Position nicht in Kontakt mit dem Ladeelement (1) ist.

7. Slider-Lademechanismus gemäß einem der Ansprüche 1-6, **dadurch gekennzeichnet, dass** er ferner Einstellmittel zum Einstellen der Vorspannung des Federarms (6) aufweist.

8. Gerät zum Lesen und/oder Beschreiben optischer Aufzeichnungsträger, **dadurch gekennzeichnet, dass** es einen Slider-Lademechanismus gemäß einem der Ansprüche 1-7 aufweist.

## Revendications

1. Un mécanisme de chargement équipé d'un curseur pour un lecteur optique, disposant d'un curseur (2) fixé à un bras élastique (6) et abaissé sur la surface d'un support de stockage optique (8) et/ou élevé de la surface du support de stockage optique (8) et d'un élément de chargement (1) séparé du bras élastique (6), l'élément de chargement (1) pénétrant entre la surface du support de stockage optique (8) et le bras élastique (6) et étant actionné via un levier (3) pour agir sur le bras élastique (6) pour abaisser et/ou élever le curseur (2), **caractérisé en ce que** le levier (3) est actionné via un mécanisme d'engrenage (5,7) disposant d'une broche de chargement (7) vissée fournie avec la roue d'engrenage et d'une crémaillère (5), qui est disposée de façon à pouvoir être déplacée et interagit avec la roue dentée de la broche de chargement (7).

2. Le mécanisme de chargement équipé d'un curseur tel que revendiqué dans la revendication 1, **caractérisé en ce qu'**un entraînement linéaire est fourni pour la crémaillère (5).

3. Le mécanisme de chargement équipé d'un curseur tel que revendiqué dans la revendication 2, **caractérisé en ce que** la roue dentée de la broche de chargement (7) est actionnée par un mouvement de la crémaillère (5) par rapport à la roue dentée avec l'entraînement linéaire.

4. Le mécanisme de chargement équipé d'un curseur tel que revendiqué dans l'une des revendications 1 à 3, **caractérisé en ce que** la roue dentée de la broche de chargement (7) est actionnée par un mouvement de la roue dentée par rapport à la crémaillère (5) à l'aide d'une fonction de suivi approximatif.

5. Le mécanisme de chargement équipé d'un curseur tel que revendiqué dans l'une des revendications 1 à 4, **caractérisé en ce qu'**il inclut également des arrêts de déplacement pour la crémaillère (5) pour garantir que le curseur (2) est toujours abaissé et/ou élevé dans une région de lecture/d'écriture d'un support de stockage (8).

6. Le mécanisme de chargement équipé d'un curseur tel que revendiqué dans l'une des revendications 1 à 5, **caractérisé en ce que**, en position abaissée, le bras élastique (6) n'est pas en contact avec l'élément de chargement (1).

7. Le mécanisme de chargement équipé d'un curseur tel que revendiqué dans l'une des revendications 1 à 6, **caractérisé en ce qu'**il inclut également un moyen d'ajustement pour ajuster la précontraite du bras élastique (6).

8. Une unité pour lire et/ou écrire sur des supports d'enregistrement optiques, **caractérisée en ce qu'**elle dispose d'un mécanisme de chargement équipé d'un curseur tel que revendiqué dans l'une des revendications 1 à 7.
